# EUROPEAN PATENT APPLICATION

(11) **EP 1 662 822 A1**
(43) Date of publication of application: **31.05.2006**
(21) Application number: 05025758.3
(22) Date of filing: 25.11.2005
(51) Int. Cl.: H04Q 7/32

(54) **Saving time in the initialization of a mobile communication terminal**

(30) Priority: 27.11.2004 KR 2004098342
(71) Applicant: LG Electronics Inc., Yongdungpo-gu Seoul (KR)
(72) Inventor: Park, Bin-Yang, Yeonsu-Gu Incheon (KR)
(74) Representative: Katérle, Axel

(57) **Abstract**

Initialization of a mobile communication terminal. An IMSI (International Mobile Subscriber Identity) information embedded in a SIM (Subscriber Identity Module) card and an IMSI information stored in a storage equipment of the terminal, which may be simply its own memory, are checked if they are consistent. If they are not consistent, the embedded IMSI information is stored in the storage equipment, and then the terminal is initialized. If they are consistent, the terminal is initialized by using the IMSI information stored in the storage equipment.

Accordingly, the apparatus and method provide a user with the convenience of reducing the initialization time of the terminal by varying the processing method according to the result of comparison between the two IMSI information. In particular, when the two values coincide the storing of all the info contained in the SIM card (smart card) is avoided, and, consequently, time saved when the mobile is initiated.

## Description

### BACKGROUND OF THE INVENTION

### 1. Field of the Invention

The present invention relates to an apparatus and method for initialization of a mobile communication terminal, and more particularly to, an apparatus and method for initialization of a mobile communication terminal, which reduces the time taken to initialize a mobile communication terminal.

### 2. Description of the Background Art

In general, a GSM (Global System for Mobile) terminal supports an international roaming service using a Subscriber Identity Module (SIM) card. The SIM card is a type of smart card that provides a user with the ability to perform mobile communication operations. A SIM card may be removed from one terminal and installed into another terminal.

In order to provide an international roaming service, the GSM terminal (hereinafter, referred to as "terminal ") uses a SIM card storing an International Mobile Subscriber Identity (IMSI) for authorizing a user and a user data.

The IMSI is composed of 2 bytes, and comprises a mobile country code (MCC) of 3 bits for indicating nation information, a mobile network code (MNC) of 2 or 3 bits for indicating service provider information, and a mobile subscriber identification number (MSIN) of 10 or 11 bits for indicating a specific number of the SIM card.

The user data stored in the SIM card contains information such as user information, service provider information, an encryption key, location information, a contacts list, etc. When the user inserts the SIM card into a terminal, the SIM card sends the user data to the terminal. When the user data transmitted to the terminal is modified due to a user's phone call-related operation, the terminal sends the modified user data to the SIM card and updates the user data of the SIM card. [Table 1] shows a lot of information on a user data stored on a SIM card.

| Category | SIM information | content | size(octets) | remarks |
|---|---|---|---|---|
| Encryption Key | EF_KEYS | KSI, Ck, Ik | 33 | |
| | EF_KEYSPS | KSIPS, CkPS, IkPS | 33 | |
| PLMN list | EF_UPLMNsel | PLMN id, RAT | 5*n | N is the number of PLMN |
| Location Information | EF_LOCI | TMSI, LAI, etc | 11 | |
| | EF_PSLOCI | P-TMSI, signature, RAI | 14 | |
| ACM | EF_ACM | Count of unit | 3 | Cumulative Calls |
| Service Provider Name | EF_SPN | Condition, Name | 17 | |
| Contact List | EF_ADN | TON, Dial Number, etc | 14 + x | X is the length of Alphald |
| | EF_FDN | TON, Dial Number, etc | 14 + x | |
| | EF_BDN | TON, Dial Number, etc | 14 + x | |
| | EF_LND | TON, Dial Number, etc | 14 + x | |
| SMS | EF_SMS | Status, Contents | 176 | |

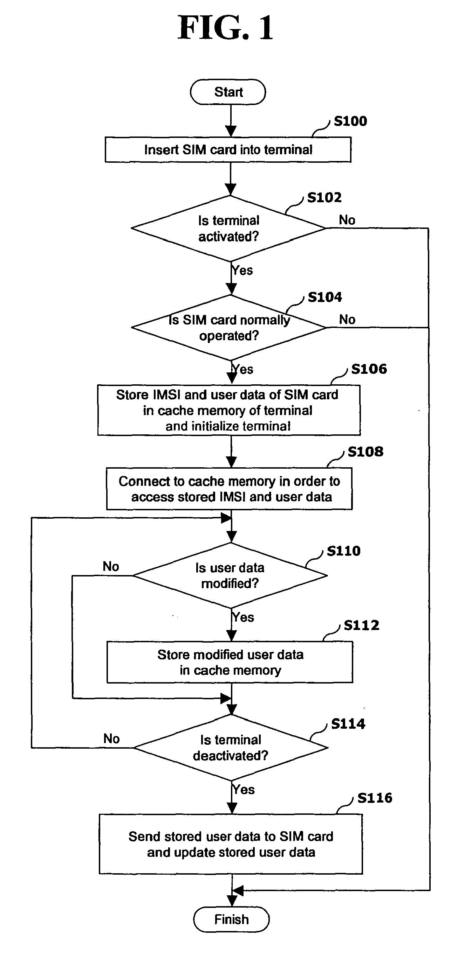

FIG. 1 is a flow chart illustrating a method for initialization of a mobile communication terminal in accordance with the prior art.

Hereinafter, the method for initialization of a mobile communication terminal in accordance with the prior art will be described with reference to FIG.1.

When a user inserts a SIM card storing information such as an IMSI, user information, service provider information, an encryption key, location information, a contacts list, etc. into a terminal and then activates (e.g., powers on) the terminal, the terminal checks if the SIM card is normally operated (S100, s102, S104). Once the SIM Card is normally operated, the terminal extracts the IMSI and the user data, stores the extracted IMSI and user data on a cache memory of the terminal, and initializes the terminal (S106). After the IMSI information is stored on the cache memory, when a phone call-related operation is carried out, the terminal connects to the cache memory in order to access the IMSI information required for the call (S108). The procedure of reading the user data from the cache memory or modifying them is repetitively carried out while the user's phone call-related operation is being carried out, if the user's phone call-related operation is finished, the last modified user data is stored on the cache memory (S110, S120). If the user deactivates (e.g., powers-off) the terminal, the terminal sends last modified user data on the cache memory to the SIM card, and the SIM card updates the stored user data with the received user data (S114, S116).

However, the prior art terminal repeats the procedure of storing data stored on the SIM card on the cache memory whenever the terminal is activated because data stored on the cache memory is temporally stored. This leads to a problem that the user has to wait during initialization in order to use the terminal.

### SUMMARY OF THE INVENTION

Therefore, an object of the present invention is to provide a user with the convenience of saving time by comparing an IMSI of a SIM card and a stored IMSI and reducing the initialization time of a terminal according to the result of comparison.

To achieve the above object, there is provided a mobile communication terminal, in which first information stored in a subscriber identity module (SIM) card is compared with second information stored in a storage equipment, and if the two information is consistent with each other, the terminal is initialized by using fourth information regarding an initialization stored in the storage equipment of the terminal.

Furthermore, to achieve the above object, there is provided a method for initializing a mobile communication terminal, comprising: comparing first information stored in a subscriber identity module (SIM) card with second information stored in a storage equipment of the terminal; and if the two information is consistent with each other, initializing the terminal by using fourth information regarding an initialization stored in the storage equipment of the terminal.

Preferably, the storage device according to the present invention is a device in which stored information is not lost even if the power is interrupted.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG.1 is a flow chart illustrating the operation of a terminal and a SIM card in accordance with the prior art;
FIG.2 is a block diagram of a terminal and a SIM card in accordance with the present invention; and
FIG.3 is a flow chart illustrating the operation of the terminal and the SIM card in accordance with the present invention.

### DETAILED DESCRIPTION OF THE PREFERRED EMBODIMENTS

Hereinafter, a preferred embodiment of the present invention will be described with reference to the accompanying drawings.

The basic concept of the present invention is to provide a user with the convenience of saving the initialization time of a terminal by comparing an IMSI stored on the terminal and an IMSI stored in a SIM card at a point of time when the terminal is activated, and varying the processing method according to the result.

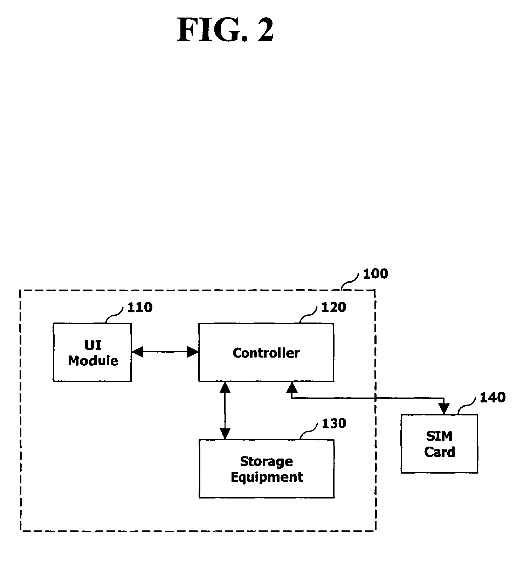

FIG.2 is a block diagram showing the construction of an apparatus for initialization of a terminal in accordance with the present invention.

As shown in FIG.2, the apparatus for initialization of a terminal comprises a UI (User Interface) module 110, a controller 120, and a storage equipment 130.

The SIM card 140 stores IMSI information and user data such as user information, service provider information, an encryption key, location information, a contacts list, etc., as shown in [Table 1].

The storage equipment 130 the IMSI information and the user data stored on the SIM card 140 when the terminal is activated, and sends the information data stored in the storage equipment to the SIM card when the terminal is deactivated. Besides, the storage equipment 130 is a nonvolatile storage equipment which is low in power consumption and has the characteristic of maintaining stored data without losing them even if the power is turned off, which includes a flash memory, a Nvram (Nonvolatile random access memory) or the like. The controller 120 controls data input and output between the SIM card 110 and the storage equipment 130 according to whether the terminal is activated or not. The UI module 110 requests IMSI information from the management module or sends them thereto according to a key input for a user's phone call service.

Hereinafter, the block diagram in which the initialization apparatus of the mobile communication terminal of the present invention and a SIM card are combined with each other will be described with reference to FIG.2.

When the user couples a SIM card storing IMSI information and user data including user information, service provider information, an encryption key, location information, contacts list, etc. to a terminal, and then activates (powers-on) the terminal, the controller 120 reads the IMSI information and the user data from the SIM card, and then stores the read data in the storage equipment 130. If the user carries out a phone call-related operation, the controller connects to the storage equipment in order to access the IMSI information required for the operation. The IMSI manager module repeats the procedure of reading the IMSI information from the storage equipment or modifying them while the aforementioned operation is being carried out. The IMS information thus modified is stored in the storage equipment. If the user deactivates (powers-off) the terminal, the SIM manager module 120 recognizes the deactivation and then sends the modified data stored in the storage equipment to the SIM card, thereby having the data stored in the storage equipment 130 maintained without being lost.

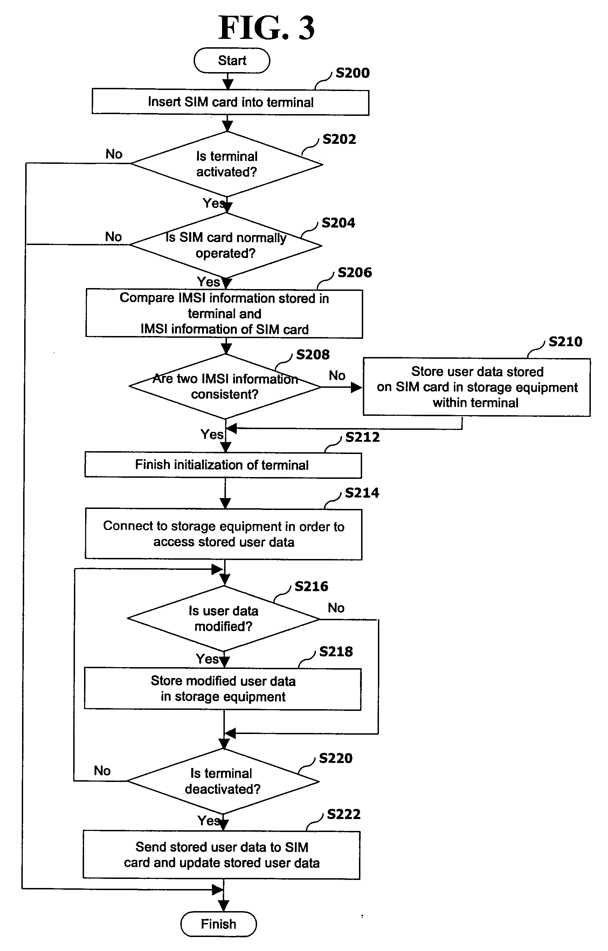

FIG.3 is a flow chart illustrating the operation of the terminal and the SIM card in accordance with the present invention.

Hereinafter, the operation of the terminal and the SIM card will be described in detail with reference to FIGs.2 and 3.

A user inserts a SIM card into a terminal, and then applies power to the terminal, to thus activate the terminal (S200 and S202). When the terminal is activated, the controller checks if the inserted SIM card is normally operated. As a result of checking, if it is normally operated, the controller compares if MCC, MNC, and MSIN of the IMSI stored in the terminal and MCC, MNC, and MSIN of the IMSI stored on the SIM card are the same (S204, S206). As a result of comparison, if the two IMSIs are not consistent, the IMSI and the user data stored on the SIM card inserted into the terminal are stored in a storage equipment (e.g., a flash, Nvram) within the terminal, and finishes the initialization procedure of the terminal so as to perform a communication by using the SIM card (S208, S210, S212). On the contrary, as a result of comparison, if the two IMSI information are consistent, the controller does not store the user data of the SIM card in the storage equipment but immediately finishes the initialization procedure of the terminal because the user data stored on the SIM card is already stored in the storage equipment of the terminal (S208, S212). After the initialization procedure is finished, when a phone call-related operation on the terminal is carried out by the user, the controller connects to the storage equipment in order to access the user data required for the operation (S214). By the user's phone call-related operation, the procedure of reading the user data from the storage equipment or modifying them is repetitively carried out, and when the user's phone call-related operation is finally finished, the last modified user data is stored in the storage equipment (S216, S218).

After the user performs a certain purpose using the user data, when the terminal is deactivated (i.e., the power is interrupted), the controller sends the stored user data to the SIM card and updates the stored user data (S220, S222). Further, in the even that the same SIM card is inserted, the user data stored in the storage equipment is stored for fast initialization without being lost.

As set forth, in the present invention, the IMSI information stored in the storage equipment of the terminal and the IMSI information of the SIM card coupled to the terminal are compared at a point of time when the terminal is initialized. If the two IMSIs are not consistent, the user data of the SIM card coupled to the terminal is stored in the storage equipment provided at the terminal, and then the initialization procedure is finished. Otherwise, since the initialization is finished without the procedure of storing the user data in the storage equipment, the initialization time of the terminal can be reduced, as well as the read and/or write operation on the user data can be performed through an interface between the SIM card and the storage equipment.

The present invention can be applied even when a certain input is performed from communication such as an internet, data communication, a video calling, a bluetooth, etc., or when an operation for modifying or updating IMSI information is performed.

As explained above, the apparatus and method for initialization of the mobile communication terminal according to the present invention has the effect of providing the user with the convenience of saving time because the initialization time of the terminal is reduced according to the result of comparison between the IMSI of the SIM card and the IMSI stored in the terminal.

As the present invention may be embodied in several forms without departing from the spirit or essential characteristics thereof, it should also be understood that the above-described embodiment is not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile communication terminal, in which first information stored in a subscriber identity module (SIM) card is compared with second information stored in a storage equipment, and if the two information is consistent with each other, the terminal is initialized by using fourth information regarding an initialization stored in the storage equipment of the terminal.

2. The terminal of claim 1, wherein if the first information and the second information are not consistent with each other, third information regarding an initialization stored in the SIM card is read thereby to update the fourth information regarding an initialization stored in the storage equipment of the terminal, and then the terminal is initialized by using the updated fourth information.

3. The terminal of claim 1, wherein the comparing between the first information and the second information is performed through specific numbers included in the first and second information.

4. The terminal of claim 3, wherein the specific numbers are mobile subscriber identification numbers (MSIN).

5. The terminal of claim 1, wherein the first information and the second information include international mobile subscriber identity (IMSI).

6. The terminal of claim 1, wherein the fourth information is a user data including a telephone directory, a short messaging service, position information, an encryption key, etc.

7. The terminal of claim 1, wherein the terminal is initialized after checking the first information and the second information.

8. The terminal of claim 1, wherein the storage equipment is a device in which the stored information is not lost even if power is interrupted.

9. The terminal of claim 1, wherein the storage equipment includes a flash memory or a Nvram (Nonvolatile random access memory).

10. The terminal of claim 1, wherein the storage equipment sends the stored information to the SIM card when the terminal is deactivated.

11. A method for initializing a mobile communication terminal, comprising:
comparing first information stored in a subscriber identity module (SIM) card with second information stored in a storage equipment of the terminal; and
if the two information is consistent with each other, initializing the terminal by using fourth information regarding an initialization stored in the storage equipment of the terminal.

12. The method of claim 11, wherein if the first information and the second information are not consistent with each other, third information regarding an initialization stored in the SIM card is read thereby to update the fourth information regarding an initialization stored in the storage equipment of the terminal, and then the terminal is initialized by using the updated fourth information.

13. The method of claim 11, wherein the comparing between the first information and the second information is performed through specific numbers included in the first and second information.

14. The method of claim 11, wherein the specific numbers are mobile subscriber identification numbers (MSIN).

15. The method of claim 11, wherein the first information and the second information include international mobile subscriber identity (IMSI).

16. The method of claim 11, wherein the fourth information is a user data including a telephone directory, a short messaging service, position information, an encryption key, etc.

17. The method of claim 11, wherein the terminal is initialized after checking the first information and the second information.

18. The method of claim 11, wherein the storage equipment is a device in which the stored information is not lost even if power is interrupted.

19. The method of claim 11, wherein the storage equipment includes a flash memory or a Nvram (Nonvolatile random access memory).

20. The method of claim 11, wherein the storage equipment sends the stored information to the SIM card when the terminal is deactivated.

21. The method of claim 12, wherein the terminal updates the fourth information when a certain input is performed.

22. The method of claim 21, wherein the certain input is performed from communication such as an internet, data communication, a video calling, a bluetooth, etc.

23. The method of claim 22, wherein the certain input is performed when the stored second information is modified.
